# EUROPÄISCHE PATENTANMELDUNG

(11) **EP 1 650 277 A1**
(43) Veröffentlichungstag der Anmeldung: **26.04.2006**
(21) Anmeldenummer: 05109685.7
(22) Anmeldetag: 18.10.2005
(51) Int. Cl.: C09D 183/12, C08J 7/04

(54) **Beschichtungsmasse zur Herstellung einer hydrophilen Beschichtung**

(30) Priorität: 20.10.2004 DE 102004051034
(71) Anmelder: Hella KGaA Hueck & Co., 59552 Lippstadt (DE)
(72) Erfinder: Woldt, Erik, 59555, Lippstadt (DE); Schmidt, Stephan, ¢59558, Lippstadt (DE)

(57) **Zusammenfassung**

Die vorliegende Erfindung betrifft eine Beschichtungsmasse zur Herstellung einer hydrophilen Beschichtung auf einem Kunststoffsubstrat umfassend phasensegregierte Kompartimente der nachfolgenden Verbindungsklassen:
a) mindestens einen Polyaromatenblock mit einem Molekulargewicht von etwa 1000 bis etwa 20000 g/mol,
b) mindestens einen Polyorganosiloxanblock mit einem Molekulargewicht von etwa 200 bis etwa 50000 g/mol sowie
c) mindestens einen hydrophilen Polyetherblock mit einem Molekulargewicht von etwa 100 bis etwa 50000 g/mol.

## Beschreibung

### STAND DER TECHNIK

Die vorliegende Erfindung betrifft eine Beschichtungsmasse zur Herstellung einer hydrophilen Beschichtung auf einem Kunststoffsubstrat.

Bei dem Betrieb von Scheinwerfersystemen werden Zyklen mit variierenden Temperaturen und Innenfeuchten durchlaufen. Dabei schlagen sich kondensierbare Stoffe wie Wasser, aber auch andere Stoffe an kalten Stellen des Systems nieder. Insbesondere die Abschlussscheibe des Scheinwerfers zeigt dann sichtbare Beläge. Da Wasser auf den meisten Kunststoffen nicht gut spreitet, ist die Kondensation von Wasser besonders auffällig.

Kann die Anwesenheit dieser Stoffe nicht verhindert werden, hat man versucht, diese nicht als sichtbare Beläge auftreten zu lassen.

Dazu wurden von verschiedenen Seiten Lackierungen mit hydrophilen Zuschlagstoffen empfohlen. Da diese Lacke eine gewisse Zähigkeit und Haftung auf Bisphenol-A-Polycarbonat aufweisen müssen, liegen darin begrenzt lösliche hydrophile Zuschlagstoffe vor. Problematisch ist, dass oft ein "Ausbluten" beziehungsweise Auswaschen dieser hydrophilen Stoffe beobachtet werden kann. Das Ausbluten wird besonders durch die Belegung mit Wasser intensiviert.

Durch Kontamination mit anderen organischen und anorganischen Stoffen geht die Leistungsfähigkeit der Beschichtungen verloren, insbesondere Stoffe mit niedrigerer Oberflächenspannung als die hydrophilen Zuschlagstoffe überschichten diese irreversibel und führen zur Ausbildung der unerwünschten kleinen Randwinkel bei der Kondensation von Wasser. Bei diesen Stoffen kann es sich um Polydimethylsiloxane und Trennmittel wie Fettsäureester des Pentaerythrits und anderer Polyalkohole handeln.

Durch diese beiden Mechanismen wird die Leistungsfähigkeit einer solchen Beschichtung sichtbar vermindert.

Eine weitere Anforderung ist demzufolge die Fähigkeit, gegen verschiedene Kontaminanten tolerant zu sein und kein Ausbluten der hydrophilen Gruppen zuzulassen. Weiterhin muss eine gute Haftung zu dem Bisphenol-A-polycarbonat gewährleistet sein.

Eine weitere Forderung besteht darin, im Wellenlängenbereich des sichtbaren Lichtes klar durchsichtig zu sein.

Die Aufgabe der vorliegenden Erfindung besteht darin, ein Beschichtungssystem zu schaffen, das eine gute Anbindung zum Kunststoffsubstrat zeigt und ebenfalls Gruppen enthält, die einerseits die oben genannten Kontaminanten aufnehmen und andererseits hydrophile Gruppen, die sich schnell an die Oberfläche bewegen können, wenn dort Wasser zugegeben ist.

Die Lösung dieser Aufgabe liefert eine Beschichtungsmasse der eingangs genannten Gattung, die phasensegregierte Kompartimente folgender Verbindungsklassen enthält:
a. Polyaromatenblöcke mit einem Molekulargewicht von 1000-20000g/mol,
b. Polyorganosiloxanblöcke mit einem Molekulargewicht von 200-50000 g/mol,
c. Hydrophile Polyetherblöcke mit einem Molekulargewicht von 100-50000 g/mol,
   und optional
d. Polyolefinblöcke mit einem Molekulargewicht von 2000-500000 g/mol.

Diese einzelnen Kompartimente eines Compounds übernehmen verschiedene Aufgaben, um die insgesamt zu erzielende Funktion zu erfüllen.

Die Stoffe a. einerseits und b. / c. / d. andererseits sind in den angegebenen Molekulargewichtsbereichen miteinander thermodynamisch nicht verträglich und weisen eine spontane Segregation der Phasen auf. Diese Mehrphasigkeit kann durch Durchstrahlungselektronenmikroskopie nach Kontrastierung nachgewiesen und mit Hilfe der dynamisch-mechanischen Spektroskopie können die Glasübergangstemperaturen der einzelnen voneinander abgegrenzten Bereiche als Maxima des Verlustmoduls G'' und des Verlustfaktors tan(δ) bestimmt werden, wenn sich diese Bereiche in ihren charakteristischen Relaxationszeiten voneinander unterscheiden.

Wichtig in diesem Zusammenhang ist, dass die einzelnen Phasen spontan im Nanometerbereich Domänen ausbilden. Dadurch wird gewährleistet, dass die Diffusionswege der beteiligten korrespondierenden Absorbergruppen und Kontaminanten klein gehalten werden. Weiterhin müssen die Absorber im gummielastischen Zustand vorliegen, damit die beteiligten Absorbergruppen in der Lage sind, kooperative Umlagerungen im Bereich von mehreren nm³ auszuführen. Um die Größenordnung auf molekularen Skalen zu verdeutlichen, entsprechen diesem Volumen in etwa 40 -CH₂- - Sequenzen in einer mit sechs weiteren Ketten koordinierten Polymerkette. Die typischen Relaxationszeiten für solche Vorgänge können mit Hilfe der dynamisch-mechanischen Spektroskopie abgeschätzt werden.

Aus thermodynamischen Gründen werden die hydrophilen Segmente nicht an der Oberfläche der trockenen Beschichtung zu finden sein. Vielmehr wird sich dort das Polyorganosiloxan, vorzugsweise Polydimethylsiloxan (PDMS) aufhalten. Bevorzugt handelt es sich bei den hydrophilen Polyethern um Polyethylenglycol oder Copolykondensate des Ethylenglycols mit anderen mehrwertigen Alkoholen. Ist jedoch der hydrophile Polyether beziehungsweise das Polyethylenglycol (PEG) über kurze Spacer-Moleküle mit dem PDMS verbunden, wird bei der Bildung von flüssigem Wasser durch Betauung auf der Schicht das PEG in die wässrige Phase orientiert und zu einem Verlaufen beziehungsweise Spreiten der Wassertropfen zu einem Wasserfilm führen.

Diese in-situ Konditionierung tritt auf, da die Relaxationszeiten im Bereich so kleiner Molekülteile und der beteiligten Partner PEG und PDMS bei deutlich weniger als einer Sekunde liegen. Erreicht werden soll durch eine Bindung der hydrophilen Gruppen an eine gummielastische Phase, dass diese Gruppen im oberflächennahen Bulk beweglich bleiben.

Die PDMS nehmen diverse Kontaminanten wie andere Silicone auf, ohne die Leistungsfähigkeit der Schicht herabzusetzen.

Diese Stoffklassen weisen jedoch keine gute Adhäsion zu dem Kunststoff des Substrats, zum Beispiel Polycarbonat auf und werden deshalb nicht ohne spezifisch zu Polycarbonat orientierte Gruppen als ein geeignetes Beschichtungssystem verwendet werden können.

Aus anderen Versuchen ist bekannt, dass Polystyrolpolymere eine gute Haftung zum Beispiel zu Polycarbonat aufweisen können.

Von Interesse ist hierbei die Koppelung der einzelnen funktionellen Ketten miteinander. Im vorliegenden Fall wird ein Ausführungsbeispiel ausgeführt, dessen Rohstoffe aus kommerziellen, bereits erhältlichen Polymeren stammt.

Beispielsweise sind Styrolblockcopolymere vom Typ A-B-A mit gummielastischen Mittelblöcken für viele Anwendungen bekannt. Diese Blockcopolymere enthalten den für diese Anwendung geforderten Polyaromatenblock, dieser kann für sich oder mit Hilfe darin löslicher weiterer Polyaromatenharze eine gute Adhäsion insbesondere zum Polycarbonat aufbauen.

Der gummielastische Mittelblock sollte vorzugsweise geeignet sein, mit einer ausreichenden Anzahl an PDMS-Ketten und PEG-Ketten gepfropft zu werden. Dazu eignet sich zum Beispiel die Kopplung über eine Imid-Brücke, die einerseits aus auf den gummielastischen Mittelblock aufgepfropftem Maleinsäureanhydrid und andererseits aus einem primären Aminrest an den PEGbeziehungsweise PDMS-Ketten gebildet wird und eine gute Stabilität aufweist.

Die PDMS- und PEG-Ketten können zum Beispiel in Form eines Copolymers eingesetzt werden. Dadurch ist die besonders gewünschte räumliche Nähe der aus diesen Gruppen gebildeten Kompartimente gegeben.

Weitere Stoffe können vorteilhaft angewendet werden, damit bestimmte Eigenschaften der Beschichtung erzielt werden können. Dazu gehören beispielsweise:
- Stabilisatoren gegen Abbau durch erhöhte Temperatur, zum Beispiel sterisch gehinderte Phenole und Amine sowie Lichtschutzmittel wie Benzotriazole.
- Harze, die prädominant in einer der Phasen löslich sind und die Segregation nicht stören, zum Beispiel aliphatische Kohlenwasserstoffpolymere für die gummielastische Phase, auch mit geringen Aromatengehalten, und aromatische Harze mit einem Molekulargewicht nicht über dem doppelten des Molekulargewichtes der Polystyrolblöcke des Blockcopolymers.
   Diese dienen der Haftungsmodifikation und der Viskositätsverminderung bei der Compoundierung und Verarbeitung.
- Lösemittel, die eine Verarbeitung als Lacksystem zulassen.

In dem als Beschichtungsmasse dienenden erfindungsgemäßen Compound haben die Polyaromatenblöcke der Verbindungsklasse a) vorzugsweise ein Molekulargewicht von etwa 4000 bis etwa 10000 g/mol. Die Polyorganosiloxanblöcke der Verbindungsklasse b), vorzugsweise werden Polydimethylsiloxanblöcke verwendet, haben vorzugsweise ein Molekulargewicht von etwa 500 bis etwa 5000 g/mol. Die hydrophilen Polyetherblöcke der Verbindungsklasse c), vorzugsweise werden Polyethylenglykolblöcke verwendet, haben vorzugsweise ein Molekulargewicht von etwa 500 bis etwa 20000 g/mol. Die Polyolefinblöcke der Verbindungsklasse d) die optional verwendet werden, haben vorzugsweise ein Molekulargewicht von etwa 20000 bis etwa 100000 g/mol.

Die Beschichtungsmasse umfasst vorzugsweise ein Polymer, dessen hydrophile Gruppen an eine gummielastische Phase gebunden sind, die einen eigenen Glasübergang als Maximum des Verlustmoduls bei ω = 10/s bestimmt bei Temperaturen kleiner als -10°C aufweist. Die Beschichtungsmasse umfasst weiterhin wenigstens ein Polymer, dessen Gummielastische Phase an eine bei Raumtemperatur im Glaszustand vorliegende Hartphase gebunden ist, die einen eigenen Glasübergang als Maximum des Verlustmoduls bei ω = 10/s bestimmt bei Temperaturen größer als 50°C aufweist.

Vorzugsweise wird mindestens ein Polymer verwendet, dessen Zweiphasigkeit durch dynamisch-mechanische Spektroskopie nachweisbar ist. Das Polymer ist vorzugsweise gegenüber PDMS (Polydimethylsiloxan) kontaminationstolerant.

Die Erfindung betrifft insbesondere die Verwendung einer Beschichtungsmasse der vorgenannten Art als hydrophile Beschichtung auf einem Substrat, insbesondere einem Substrat, welches Polycarbonat umfasst. Die erfindungsgemäße Beschichtungsmasse eignet sich insbesondere zur Verwendung bei der Beschichtung von Kraftfahrzeugteilen, vorzugsweise von Kunststoffabschlussscheiben bei Kraftfahrzeugscheinwerfern.

### ZEICHNUNGEN

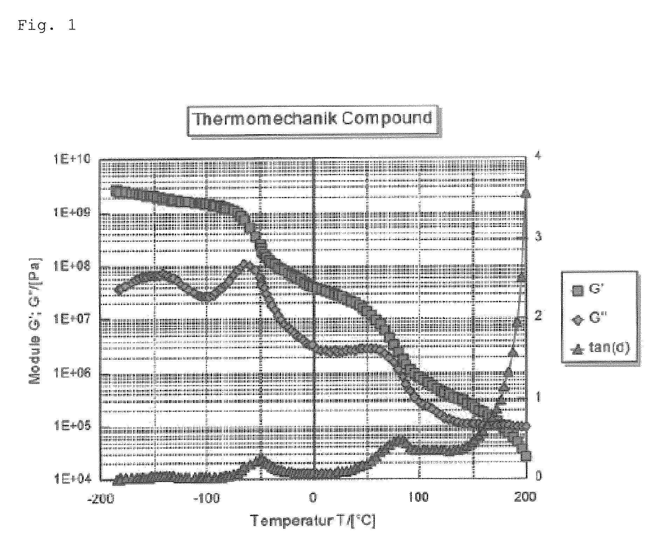

Nachfolgend wird die vorliegende Erfindung anhand eines Ausführungsbeispiels unter Bezugnahme auf die beiliegende Graphik näher beschreiben. Darin zeigt
- Fig. 1: in einem mechanisch-dynamischen Spektrometer aufgenommene Kurven der Verlustmodule G', G'' und des Verlustfaktors tan(δ) in Abhängigkeit von der Temperatur.

### BESCHREIBUNG DER AUSFÜHRUNGSBEISPIELE

### Beispiel

Als Rohstoffe werden folgende Stoffe verwendet:
- Styrolblockcopolymer: Blockpolystyrol-Blockpolyethylenbutylen-Blockpolystyrol mit ca. 7mol (Maleinsäureanhydrid)/mol (Stryrolblockcopolymer) gepfropft, einem mittleren Molekulargewicht von 120kmol/g, ermittelt mit Hilfe von Gelpermeationschromatographie und gegen PS-Standards kalibriert, und mit einem Polystyrolgehalt von 28 %.
- Aromatisches Endblockharz mit einer Nullscherviskosität von 2109mPas bei 150°C ermittelt, und einem Zahlenmolekulargewichtsmittel von 1,2kmol/g.
- Phenolisches Antioxidans Pentaerythrityl-tetrakis[3,(3,5-ditertiärbutyl-4-hydroxyhenyl)-propionat].
- PDMS-Aminoethylaminopropyl-Blockethylenoxid-Blockpropylenoxid
- copolymer mit einer Viskosität von 410mPas bei RT.

### Herstellen des Compounds:

In einem auf 160°C vorgeheizten Zweiwellenkneter wurden 29,3 g eines aromatischen Endblockharzes und 1,0 g eines sterisch gehinderten Phenols als Verarbeitungsstabilisator vorgelegt. Nach dem Aufschmelzen wurde das Maleinsäureanhydridgepfropfte Styrolblockcopolymer zu 160,0 g in zwei Portionen mit 5 Minuten Abstand zueinander zugegeben. Nachdem ein homogener Compound erreicht ist, wird das aminhaltige PDMS-PEG-Copolymer (42,0 g) tropfenweise zugesetzt, so dass die Zugabe nicht schneller erfolgt als der Verbrauch über die Imidisierung. Dadurch wird gewährleistet, dass die Masse ihre Knetbarkeit nicht verliert. Nach der Zugabe wird für 10 Minuten ein Vakuum angelegt und die Masse nach dieser Zeit aus dem Kneter entnommen. Als Schutzgas wird N₂ verwendet.

Aus dem Material werden für die Modelluntersuchung der Eignung Proben abgeschnitten und auf einer Heizpresse gegen Polycarbonatplatten ein Film aufgepresst. Die Oberseite der Heizpresse besteht aus PTFE. Wird die Beschichtung mit Wasser benetzt, spreitet dieses spontan zu einem Film. Nach einer Lagerung in PDMS-haltiger Atmosphäre ist die Beschichtung ebenfalls in der Lage, das Wasser aufgabengemäß zu spreiten.

Von dem Compound wurde eine Probe 12 x 19 x 2,6 mm³ bei 160°C geformt und in einem mechanisch-dynamischen Spektrometer Physica UDS200 im linearen viskoelastischen Bereich untersucht. Die Messfrequenz betrug ω = 10/s. Die Untersuchung umfasste einen Temperaturbereich von -185°C bis +200°C. Die erhaltene Kurve ist in Fig. 1 dargestellt.

Der Vergleich mit den Rohstoffen zeigt, wie sich das Phasenverhalten durch die Modifikation geändert hat.
- Die vom gummielastischen Mittelblock herrührende β-Relaxation tritt bei -150°C bis -170°C auf und zeigt keine Unterschiede zu dem Rohstoff.
   Das ist insoweit verständlich, als die Größenskalen der damit in Verbindung gebrachten funktionellen Gruppen im Bereich weniger Bindungslängen liegen und durch eine Pfropfung ganzer Molekülketten an anderer Stelle im Copolymer nicht beeinflusst werden sollten.
- Betrachtet man die α-Relaxation (Glasübergangstemperatur) bei
- 60°C bis -50°C, wird festgestellt, dass ein einzelner Übergang vorliegt zwischen den bei -75°C liegenden für PDMS und bei
- 45°C des reinen gummielastischen Mittelblocks der Rohstoffe. Daraus kann man interpretieren, dass im Größenskalenbereich der für den Glasübergang verantwortlichen Segmente eine weitgehend homogene Verteilung der funktionellen Gruppen PDMS und gummielastischer Mittelblock vorliegt, beziehungsweise durch die Pfropfreaktion erzwungen wurde.
- Bei ca 80°C tritt die α-Relaxation der aromatischen Endblöcke auf. Dadurch ist gezeigt, dass (zumindest) die Zweiphasigkeit erhalten geblieben ist.
- Die Zweiphasigkeit wird in einem Ordnungs-/Unordnungsübergang aufgelöst, und zwar ab 130°C aufwärts. Dass durch die Modifikation kein durchvernetztes Elastomer gebildet wurde kann durch das viskoelastische Spektrum bei 150°C gezeigt werden. Es wird kein Minimum der Dämpfung zu kleinen Frequenzen angestrebt. Bei 200°C ist das Material als auftragefähig, thermoplastisch mit tan(δ)>3 charakterisiert.

Aus diesen Befunden kann man erwarten, dass im Zeitbereich von weniger als einer Sekunde die PEG-Ketten bei Aufliegen von kondensiertem Wasser auf der PDMS-Oberfläche zum Wasser hin koordiniert werden und so den Spreitungseffekt verursachen. Ist kein Wasser, sondern eine PDMS-haltige Atmosphäre zugegen löst die dann die Oberfläche repräsentierende PDMS-Schicht Kontaminanten in sich.

Ohne sich an diese Arbeitshypothese binden zu wollen, wurde gefunden, dass die Compoundierung von Blockcopolymeren in der beschriebenen Weise zur Bildung von auf Polycarbonat gut haftenden Beschichtungen geeignet ist und dass diese Beschichtung im Gegensatz zu anderen bekannten Schichten kontaminationstolerant gegenüber in Scheinwerfern vorhandenen Stoffen ist und einen wasserspreitenden Effekt auf Dauer aufrechterhält. Darüber hinaus braucht diese Schicht nicht erst extra in Wasser "entwickelt" zu werden, wie es andere Schichten aus mit PEG verbundenen unterhalb ihrer Glastemperatur vorliegenden Blockcopolymeren erfordern. Die Schicht ist klar durchsichtig.

## Patentansprüche

1. Beschichtungsmasse zur Herstellung einer hydrophilen Beschichtung auf einem Kunststoffsubstrat umfassend phasensegregierte Kompartimente der nachfolgenden Verbindungsklassen:
a) mindestens einen Polyaromatenblock mit einem Molekulargewicht von etwa 1000 bis etwa 20000 g/mol,
b) mindestens einen Polyorganosiloxanblock mit einem Molekulargewicht von etwa 200 bis etwa 50000 g/mol sowie
c) mindestens einen hydrophilen Polyetherblock mit einem Molekulargewicht von etwa 100 bis etwa 50000 g/mol.

2. Beschichtungsmasse nach Anspruch 1, **dadurch gekennzeichnet, dass** diese weiterhin
d) mindestens einen Polyolefinblock mit einem Molekulargewicht von etwa 2000 bis etwa 500000 g/mol umfasst.

3. Beschichtungsmasse nach Anspruch 1 oder 2, **dadurch gekennzeichnet, dass** mindestens ein hydrophiler Polyether der Verbindungsklasse c) ein Polyethylenglykol oder ein Copolykondensat des Ethylenglykols mit anderen mehrwertigen Alkoholen umfasst.

4. Beschichtungsmasse nach einem der Ansprüche 1 bis 3, **dadurch gekennzeichnet, dass** diese Polyaromatenblöcke a) mit einem Molekulargewicht von etwa 4000 bis etwa 10000 g/mol umfasst.

5. Beschichtungsmasse nach einem der Ansprüche 1 bis 4, **dadurch gekennzeichnet, dass** diese Polyorganosiloxanblöcke, vorzugsweise Polydimethylsiloxanblöcke b) mit einem Molekulargewicht von etwa 500 bis etwa 5000 g/mol umfasst.

6. Beschichtungsmasse nach einem der Ansprüche 1 bis 5, **dadurch gekennzeichnet, dass** diese hydrophile Polyetherblöcke c), vorzugsweise Polyethylenglykolblöcke mit einem Molekulargewicht von etwa 500 bis etwa 2000 g/mol umfasst.

7. Beschichtungsmasse nach einem der Ansprüche 1 bis 6, **dadurch gekennzeichnet, dass** diese Polyolefinblöcke d) mit einem Molekulargewicht von etwa 20000 bis etwa 100000 g/mol umfasst.

8. Beschichtungsmasse nach einem der Ansprüche 1 bis 7, **dadurch gekennzeichnet, dass** diese ein Polymer umfasst, dessen hydrophile Gruppen an eine gummielastische Phase gebunden sind, die einen eigenen Glasübergang als Maximum des Verlustmoduls bei ω = 10/s bestimmt bei Temperaturen kleiner als -10°C aufweist.

9. Beschichtungsmasse nach einem der Ansprüche 1 bis 8, **dadurch gekennzeichnet, dass** diese ein Polymer umfasst, dessen gummielastische Phase an eine bei Raumtemperatur im Glaszustand vorliegende Hartphase gebunden ist, die einen eigenen Glasübergang als Maximum des Verlustmoduls bei ω = 10/s bestimmt bei Temperaturen größer als 50°C aufweist.

10. Beschichtungsmasse nach einem der Ansprüche 1 bis 9, **dadurch gekennzeichnet, dass** diese ein Polymer mit durch dynamisch-mechanische Spektroskopie nachweisbarer Zweiphasigkeit umfasst.

11. Beschichtungsmasse nach einem der Ansprüche 1 bis 10, **dadurch gekennzeichnet, dass** diese ein gegenüber PDMS (Polydimethylsiloxan) kontaminationstolerantes Polymer umfasst.

12. Beschichtungsmasse nach einem der Ansprüche 1 bis 11, **dadurch gekennzeichnet, dass** diese mindestens ein Styrolblockcopolymer vom Typ A-B-A mit gummielastischen Mittelblöcken umfasst.

13. Beschichtungsmasse nach einem der Ansprüche 1 bis 12, **dadurch gekennzeichnet, dass** das Polymer hergestellt wurde ausgehend von einem mit Maleinsäureanhydrid gepfropften Styrolblockcopolymer.

14. Beschichtungsmasse nach einem der Ansprüche 1 bis 13, **dadurch gekennzeichnet, dass** das Polymer hergestellt wird ausgehend von einem aminhaltigen PDMS-PEG-Copolymeren.

15. Beschichtungsmasse nach einem der Ansprüche 1 bis 14, **dadurch gekennzeichnet, dass** diese mindestens einen Stabilisator gegen Abbau durch erhöhte Temperatur, vorzugsweise mindestens ein sterisch gehindertes Phenol oder Amin umfasst.

16. Beschichtungsmasse nach einem der Ansprüche 1 bis 15, **dadurch gekennzeichnet, dass** diese mindestens ein Lichtschutzmittel, vorzugsweise Benzotriazol umfasst.

17. Beschichtungsmasse nach einem der Ansprüche 1 bis 16, **dadurch gekennzeichnet, dass** diese mindestens ein prädominant in einer der Phasen lösliches Harz, vorzugsweise ein aliphatisches Kohlenwasserstoffpolymeres für die gummielastische Phase, gegebenenfalls mit geringem Aromatengehalt oder ein aromatisches Harz mit einem Molekulargewicht umfasst, welches nicht über dem Doppelten des Molekulargewichtes der Polystyrolblöcke des Blockcopolymers liegt.

18. Beschichtungsmasse nach einem der vorhergehenden Ansprüche, **dadurch gekennzeichnet, dass** diese mindestens anfänglich ein Lösemittel enthält.

19. Verwendung einer Beschichtungsmasse gemäß einem der Ansprüche 1 bis 18 als hydrophile Beschichtung auf einem Substrat, welches Polycarbonat umfasst.

20. Verwendung einer Beschichtungsmasse gemäß einem der Ansprüche 1 bis 18 zur Beschichtung von Kraftfahrzeugteilen, insbesondere Kunststoffabschlussscheiben bei Kraftfahrzeugscheinwerfern.

21. Kraftfahrzeugteil, insbesondere Kraftfahrzeugscheinwerfer oder Teil davon, **dadurch gekennzeichnet, dass** dieses mindestens teilweise eine unter Verwendung einer Beschichtungsmasse gemäß einem der Ansprüche 1 bis 18 hergestellte Beschichtung aufweist.
